(19) Europäisches Patentamt

European Patent Office

Office européen des brevets

(11) Publication number: **0 485 469 B1**

## (12) EUROPEAN PATENT SPECIFICATION

(45) Date of publication of patent specification: **30.03.94** (51) Int. Cl.⁵: **F24D 12/02**

(21) Application number: **90912098.2**

(22) Date of filing: **26.07.90**

(86) International application number:
**PCT/GB90/01161**

(87) International publication number:
**WO 91/02198 (21.02.91 91/05)**

(54) **HEATING APPARATUS.**

(30) Priority: **05.08.89 GB 8917977**

(43) Date of publication of application:
**20.05.92 Bulletin 92/21**

(45) Publication of the grant of the patent:
**30.03.94 Bulletin 94/13**

(84) Designated Contracting States:
**AT CH DE DK FR GB LI NL SE**

(56) References cited:
**DE-A- 2 901 820**
**GB-A- 2 146 106**
**GB-A- 2 157 456**

(73) Proprietor: **SMITH, Michael George**
**The Mill Cottage,**
**1a Mill Hill Lane**
**March, Cambridgeshire PE15 9OB(GB)**

(72) Inventor: **SMITH, Michael George**
**The Mill Cottage,**
**1a Mill Hill Lane**
**March, Cambridgeshire PE15 9OB(GB)**

(74) Representative: **Morton, Colin David et al**
**Keith W Nash & Co.**
**Pearl Assurance House**
**90-92 Regent Street**
**Cambridge CB2 1DP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a heating apparatus using a main heating device such as a boiler in conjunction with a subsidiary heating device such as the back-boiler of an open fire or stove.

Various proposals have been made for incorporating a back-boiler into a central heating installation but none of these has proved satisfactory, largely because they have usually involved combining the hot flows from the central heating boiler and the back-boiler.

DE-A-2901820 discloses heating apparatus having a main heating device and a subsidiary heating device but the heating apparatus disclosed cannot operate in the manner of the present invention because the prior heating apparatus does not have a by-pass pipe or by-pass valve.

According to the invention there is provided heating apparatus comprising main flow and return pipes for connection to a main water heating device; subsidiary flow and return pipes for connection to a subsidiary water heating device; pipework for connection to an indirect cylinder and/or radiators; a flow control valve which in a first position is operative to place the main flow pipe in communication with a flow end of the pipework and in a second position is operative to place the subsidiary flow pipe in communication with the flow end of the pipework, a return end of the pipework being connected to the main and subsidiary return pipes; characterised by a by-pass pipe inter-connecting the subsidiary flow pipe and the main return pipe (121) independently of the connection from the subsidiary (121) flow pipe (102), through the pipework (140) to the main return pipe (121); a by-pass valve in the by-pass pipe; and control means for controlling the valves such that in a boosted mode of operation the flow control valve is in the first position thereof and the by-pass valve is open to allow water from the subsidiary flow pipe to flow through the by-pass pipe (141) and to enter the main return pipe, whereby the heat output of the subsidiary heating device boosts the temperature of the water in the return pipe to the main heating device.

The apparatus may additionally include a pump for fitting in said pipework, the control means controlling the pump to pump water through the cylinder and, under appropriate conditions, through both the cylinder and the radiators.

The control means preferably controls operation of the valves and pump such that if the subsidiary heating device is started up from cold without the main heating device being operated, convection occurs through the subsidiary flow pipe, through the flow control valve in its second position, through the pipework and the indirect cylinder, and thence into the subsidiary return pipe with the by-pass valve remaining closed, until a first threshold temperature is reached in the subsidiary flow pipe. When this first threshold temperature is reached, the pump is preferably energised to pump the water through the pipework and the cylinder but not the radiators. If a second threshold temperature, higher than the first threshold temperature, is exceeded water is conveniently pumped through both the cylinder and the radiators.

The second threshold temperature is preferably variable, such that it can be determined and varied by the user of the apparatus.

Preferably the apparatus includes regulatory means whereby the flow control valve is in its second position and the main water heating device is rendered non-operational whenever the temperature of water in the subsidiary flow pipe exceeds a third threshold temperature.

The regulatory means preferably comprises a thermostat for recording the temperature of water in the subsidiary flow pipe, and associated means for controlling the flow control valve and the main water heating device according to whether the thermostat records a temperature of above or below the third threshold value.

The third threshold temperature value is preferably variable, such that it can be determined and varied by the user of the apparatus. Conveniently, the second and third threshold temperatures have the same value, in which case they are desirably determined and recorded at the same point in the apparatus.

The regulatory means can be used to "balance" the work done by both main and subsidiary heating devices, by ensuring that when the subsidiary heating device is generating sufficient heat to satisfy the user's requirements, the main heating device is not kept unnecessarily operational. Until that point, however, both main and subsidiary heating devices can be operated in tandem to generate hot water in the apparatus. This arrangement can lead to savings in fuel consumption.

Apparatus in accordance with the present invention will now be described by means of the following example and with reference to the accompanying drawings, of which:

Figure 1 shows schematically a domestic hot water and central heating system, with a link to a subsidiary heating device, in accordance with the present invention;

Figure 2 shows the system of Figure 1 in more detail;

Figure 3 shows the electrical circuitry by means of which the system of Figures 1 and 2 is controlled; and

Figure 4 shows the valve 8 of Figures 1 - 3 in its two alternative positions A and B.

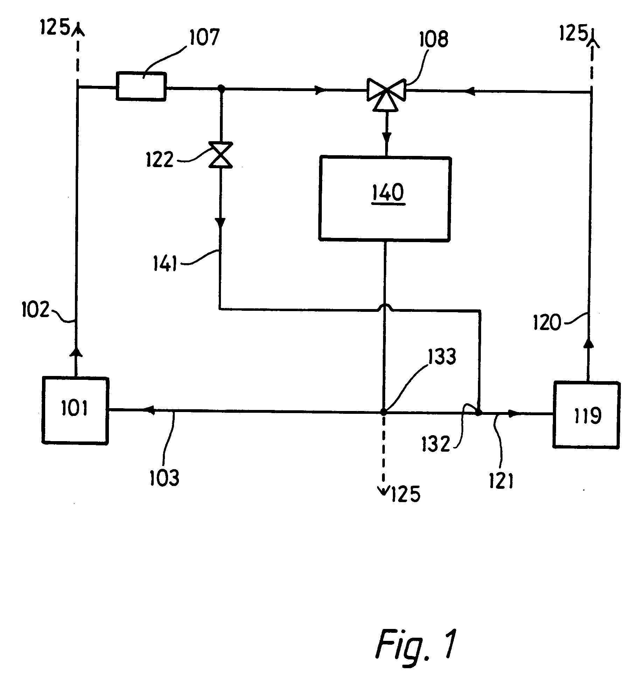

Referring firstly to Figure 1, a domestic hot water and central heating system, such as might be found in the ordinary home, is shown schematically. The circuit shown is a portion of the so-called primary water circuit.

The system comprises a boiler (the main water heating device) 119, having a main flow pipe 120 and a main return pipe 121, and a solid fuel burner 101 (the subsidiary heating device) which has been linked up to the system in accordance with the present invention. The solid fuel burner 101 has a flow pipe 102 and a return pipe 103 (the subsidiary flow and return pipes).

The system also comprises pipework 140, shown schematically in Figure 1, which is connected to an indirect water cylinder and to a domestic central heating radiator circuit. The pipework also includes a pump to assist the flow of water around the circuit in the direction shown by the arrows. At its return end, pipework 140 is connected to the neutral point of the circuit at T connection 133.

Flow control valve 108 is a three-way motorized valve which can occupy either of two positions, in the first of which water flow is allowed in the circuit 119-120-108-140-133-121 (ie. main flow pipe communicates with flow end of pipework 140) and in the second of which water flows in the circuit 101-102-108-140-133-132-103 (ie. subsidiary flow pipe communicates with flow end of 140).

A by-pass pipe 141 allows, in certain circumstances, for water from the subsidiary flow pipe 102 to enter the main return pipe 121 (via T-connections 132 and 133), such that the heat output of burner 101 boosts the temperature of the water in the main return pipe 121. By-pass valve 122 is an on-off valve which serves to "open" and "close" pipe 141.

A series of pipe thermostats 107 serves to regulate the operation of the system according to the temperature of water in the flow pipe 102. 107 is a regulatory means which forms part of a general control means for controlling in particular valves 108 and 122 and the efficient running of the system as a whole.

Pipework at points 125 leads to a water tank feeding the primary circuit.

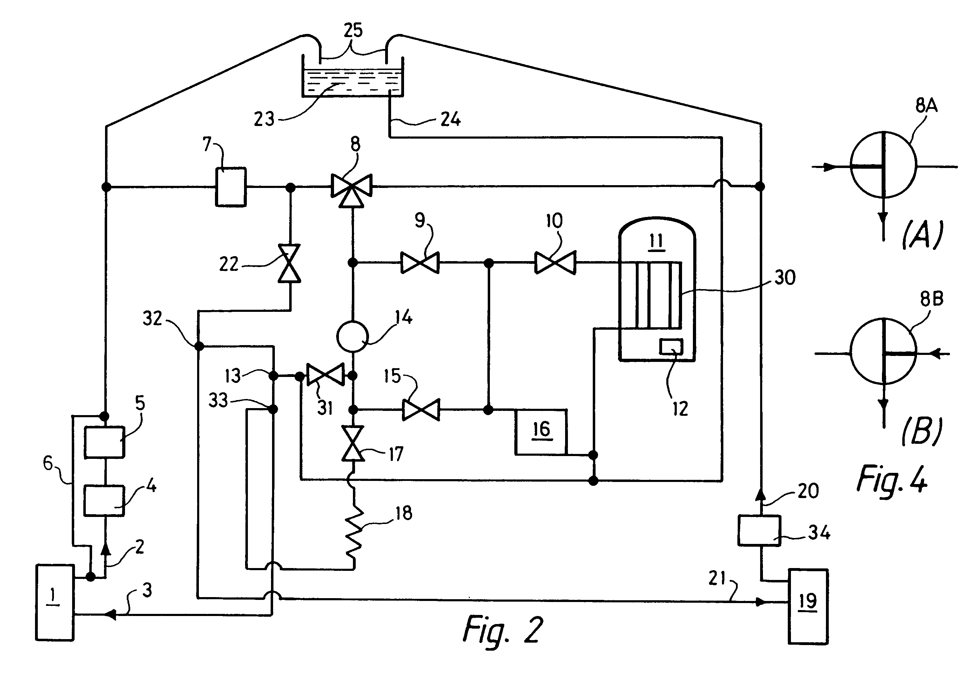

The complete system of Figure 1 is shown in more detail in Figure 2, in which main boiler 19 has a flow pipe 20 and a return pipe 21, and an indirect hot water cylinder 11. Water in the primary circuit can be heated by boiler 19 and pumped through the boiler in the direction shown to pass through heating coil 30 in the indirect water cylinder 11. This serves to heat up water contained in cylinder 11, which can be drawn off through the so-called secondary water circuit (not shown) for domestic consumption.

Cylinder thermostat 12 monitors the temperature of the water contained in 11. It is set to switch from its low temperature position (position A) to its high temperature position (position B) at a desired hot water temperature set by the user.

Heated water in the primary circuit can also pass through the central heating circuit 18 (shown condensed) which will typically comprise a number of radiators located around the home. Thus, the cylinder 11, pump 14, radiators 18 (and other components shown in Figure 2) are connected in pipework (represented as 140 in Figure 1) which at its flow end is connected to the valve 8 and at its return end is connected to T junction 32.

Pipe thermostat 34 monitors the temperature of water in the boiler flow pipe 20, and is used to safeguard against the possibility of over-heating (and possibly boiling) of water in boiler 19.

A solid fuel burner 1 has been linked up to the domestic hot water and central heating system in accordance with the present invention. The solid fuel burner 1 serves as a subsidiary heating device, and may be the back-boiler of an open fire or wood burning stove. Water in the primary circuit can pass through burner 1 in the direction shown, via flow pipe 2 and return pipe 3. Energy generated by the solid fuel burner is used not only to heat the surroundings but also to contribute towards the heating of water in the primary circuit.

Pipe thermostats 4 and 5 monitor the temperature of water heated by burner 1. They are set to switch from their bow temperature (position A) to their high temperature (position B) position at a first threshold temperature of 60°C (140°F).

Pipe thermostat 7 can be set by the user to switch from its low temperature (A) to its high temperature (B) position at any second/third threshold temperature between 61 and 71°C (142 and 160°F), thus allowing the user a certain amount of control over operation of the system. The function of thermostat 7 is as a regulatory means and is two-fold. When only burner 1 is in use, it regulates the water temperature at which water flow is directed through the central heating circuit 18 as well as the cylinder 11. When both burner 1 and boiler 19 are operational, it regulates the point at which the boiler is switched off and the burner 1 alone used to heat water in the primary circuit.

The temperatures and temperature ranges for which thermostats 4, 5 and 7 are set have been found to allow efficient running of the system under all conditions, however, thermostats set to switch at any sensible temperatures may be used.

An additional flow pipe 6, of internal diameter less than that of flow pipe 2, also takes water flow from burner 1 but by-passes pipe thermostats 4 and 5. This ensures a flow through 4 and 5 even when pump 14 is not operational (or when valves 22 and 8 are closed to the flow from burner 1), allowing the water temperature in flow pipe 2 to be monitored at all times when burner 1 is in use.

The system comprises a 3-way motorized flow control valve 8, which can adopt either of the two positions marked A and B in Figure 4. Position B is occupied when valve 8 is electrically live, position A when it is not.

The system also comprises motorized on-off valves 9, 10, 17 and 22. 9 and 10 are closed when live but otherwise open; 17 and 22 are open when live but otherwise closed. Valves 10 and 17 specifically control access to the domestic hot water cylinder 11 and the central heating circuit 18 respectively. The valve 22 is in a by-pass pipe which interconnects the flow pipe 2 and a junction 32, at which the by-pass pipe communicates with the main return pipe 21.

Gate valves 15 and 31 provide small restrictions at appropriate points in the circuit, which encourage the flow of water in the desired direction into one of the two return pipes 3 or 21. Gate valve 31 specifically allows a small but necessary amount of flow from the pump 14 to T connection 13 at all times when 14 is operational, even if valves 17 and 10 are both closed. The gate valves will generally be adjusted to provide the necessary amount of flow on installation of the system.

Pump 14, when operational, assists the flow of water around the circuit. A conventional heat leak 16 (typically a radiator) also forms part of the circuit. 13 and 33 are T connections allowing flow of water towards either or both of return pipes 3 and 21. Junction 32 links the by-pass pipe with the return pipe 21.

Water tank 23, generally located in an attic, provides a cold feed 24 to top up the primary circuit when necessary. Vents 25 allow for overflow of water from the primary circuit, for instance on expansion of the water at elevated temperatures, back into tank 23.

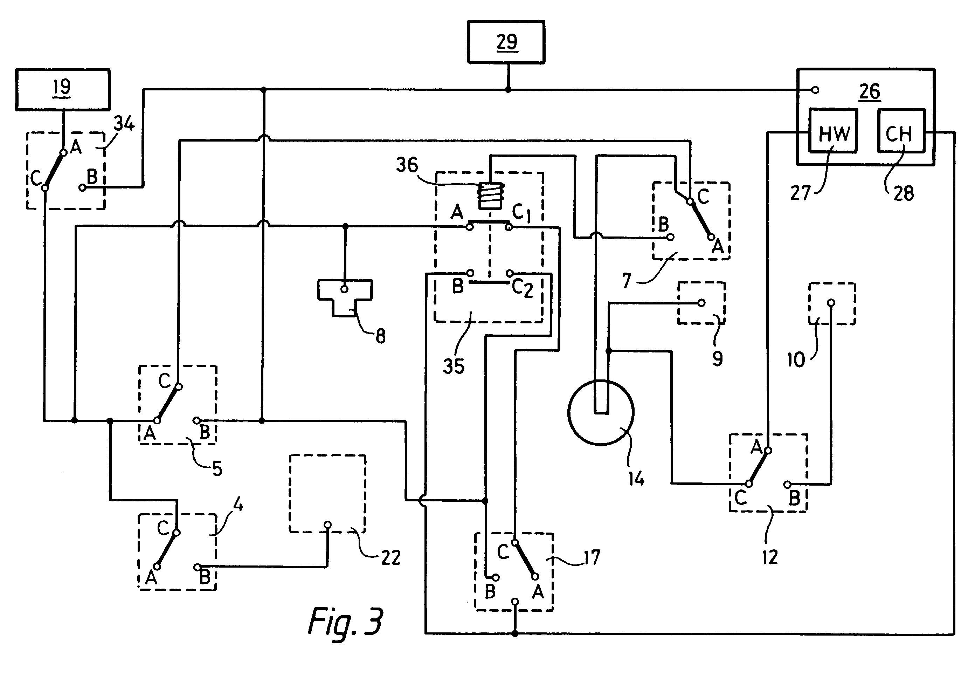

Figure 3 shows the electrical circuitry by means of which the system of Figures 1 and 2 is controlled. Motorized on-off valves 9, 10, 17 and 22 are shown. Valve 17 also comprises a two-way electrical switch, designed such that when the valve is live a connection is formed between points C and B. In the normal, non-live state, the connection is from C to A, as shown.

Pipe thermostats 4, 5, 7 and 34 and cylinder thermostat 12 also comprise two-way electrical switches. These occupy positions A (connection C to A) or B (connection C to B) according to whether they are in their low temperature or high temperature state respectively.

Relay 35 is set up such that when its input 36 is electrically live, a connection is formed between contact points B and $C_2$. When 36 is not live, a connection exists between points A and $C_1$, as shown in Figure 2. This relay provides a degree of control over the operation of boiler 19, ensuring that the boiler is switched off when no longer needed to heat water flowing through the system.

Also shown in Figure 3 are the motorized three-way valve 8, electrical pump 14 and boiler 19. Both 14 and 19 are operational when supplied with current. A 3 amp fused spur ac supply 29 powers the circuit.

The domestic user has access to a programmer 26, on which he can select a desired programme, either "domestic hot water" (switch 27) or "central heating" (switch 28). The former will control the system to generate hot water in cylinder 11, the latter to generate hot water for passage through the radiators of central heating circuit 18. Programmer 26 will typically comprise other controls such as timers, to enable the user to select a desired programme at a desired time.

The method of operation of the apparatus of Figures 1 - 3 in a typical domestic hot water system is described below. For each situation described, a summary is given of the status of each of the thermostats and valves shown in the Figures, in which the following abbreviations are used:

L = Live
N = Not live
LT = Low temperature position (thermostats)
HT = High temperature position (thermostats)
A = Valve/thermostat in position A
B = Valve/thermostat in position B
Cld = Closed
A-$C_1$ = Connection between points A and $C_1$ (relay 35)
B-$C_2$ = Connection between points B and $C_2$ (relay 35)

A. Use of solid fuel burner only

1. When the solid fuel burner 1 is first lit, water is heated by the burner and flows by convection through the flow pipes 2 and 6, valve 8 (in position A), valves 9 and 10, the hot water cylinder 11, the T junction

4

13 and back into the return pipe 3 of the burner 1. Some water also passes through the heat leak 16, by-passing valve 10 and the cylinder 11. Pump 14 is not operational. Thus, the burner is heating water in the primary circuit and generating hot water in cylinder 11. The temperature of the water in the system is at present below 60°C (140°F).

Summary

| Item | 4 | 5 | 7 | 8 | 9 | 10 |
|------|------|------|------|------|------|------|
| Status | LT | LT | LT | N | N | N |
| Position | A | A | A | A | Open | Open |

| Item | 12 | 14 | 17 | 19 | 22 | 27 | 28 | 34 | 35 |
|------|------|------|------|------|------|------|------|------|------|
| Status | LT | N | N | N | N | N | N | LT | N |
| Position | A | Off | Cld | Off | Cld | Off | Off | A | A-C$_1$ |

2. When the water temperature in the primary circuit reaches a first threshold of 60°C (140°F), thermostats 4 and 5 switch to their high temperature position (B). This activates valve 9, which closes when live, and also pump 14. Water now passes from valve 8, through the pump, to gate valve 15 and on through valve 10, cylinder 11, T junction 13 and into the return pipe 3. Some water still passes through the heat leak 16.

At this higher temperature, the pump has been automatically brought in to assist the flow of water around the pipework and cylinder 11.

Summary

| Item | 4 | 5 | 7 | 8 | 9 | 10 |
|------|------|------|------|------|------|------|
| Status | HT | HT | LT | N | L | N |
| Position | B | B | A | A | Cld | Open |

| Item | 12 | 14 | 17 | 19 | 22 | 27 | 28 | 34 | 35 |
|------|------|------|------|------|------|------|------|------|------|
| Status | LT | L | N | N | N | N | N | LT | N |
| Position | A | On | Cld | Off | Cld | Off | Off | A | A-C$_1$ |

3. When the water temperature in the primary circuit reaches the second threshold temperature, set by the user on thermostat 7, thermostat 7 switches to its high temperature position, and this has the effect of energising relay 35 and thus opening valve 17, which is now live. Water passes from valve 8 through the pump 14 and then into three branches of the circuit:

a) through gate 15 and heat leak 16 to T junction 13 and back to the return pipe 3;

b) through gate 15, valve 10 and cylinder 11, before returning through 13 to the burner;

c) through valve 17 and into the central heating circuit 18, returning via T junction 33 and return pipe 3.

Thus when the water temperature exceeds a second, higher threshold set by the user, of between 61 and 71°C (142 and 160°F), some water is pumped through the radiators of the central heating circuit, thus avoiding the passage of more heat through the cylinder and pipework circuit than can be absorbed. The pump is still on, and hot water is still being generated in the secondary water circuit in cylinder 11.

Summary

| Item | 4 | 5 | 7 | 8 | 9 | 10 | | | |
|------|---|---|---|---|---|-----|---|---|---|
| Status | HT | HT | HT | N | L | N | | | |
| Position | B | B | B | A | Cld | Open | | | |

| Item | 12 | 14 | 17 | 19 | 22 | 27 | 28 | 34 | 35 |
|------|----|----|----|----|----|----|----|----|----|
| Status | LT | L | L | N | N | N | N | LT | L |
| Position | A | On | Open | Off | Cld | Off | Off | A | B-C$_2$ |

4. If at any time cylinder thermostat 12 switches to its higher temperature position B, indicating that water in the secondary circuit in cylinder 11 is sufficiently hot, the effect is to energize, and hence close, valve 10. This prevents the further flow of water through cylinder 11 until thermostat 12 returns to its low temperature position, thus controlling the temperature of domestic hot water generated in the secondary circuit.

B. Use of "Hot Water" Programme only

1. If the user selects the "hot water" programme (27) on programmer 26, this serves to switch on boiler 19 and pump 14. The solid fuel burner is not in use in this case.

Valve 8 is in position B; valve 10 is open and valves 9, 17 and 22 are closed. All thermostats are initially in their low temperature positions.

Water flows from the boiler 19, where it is being heated, through valve 8, pump 14, gate valve 15, valve 10, the hot water cylinder, T junctions 13 and 32 and back to the boiler return pipe 21. Some water also passes through the heat leak.

Summary

| Item | 4 | 5 | 7 | 8 | 9 | 10 | | | |
|------|---|---|---|---|---|-----|---|---|---|
| Status | LT | LT | LT | L | L | N | | | |
| Position | A | A | A | B | Cld | Open | | | |

| Item | 12 | 14 | 17 | 19 | 22 | 27 | 28 | 34 | 35 |
|------|----|----|----|----|----|----|----|----|----|
| Status | LT | L | N | L | N | L | N | LT | N |
| Position | A | On | Cld | On | Cld | On | Off | A | A-C$_1$ |

2. Water is no longer passing through that part of the primary circuit containing pipe thermostats 4, 5 and 7. Thermostat 12 in the hot water cylinder, however, will switch to its high temerature position when water in the secondary circuit in the cylinder reaches its required temperature. This has the effect of switching off the pump and the boiler, opening valve 9 and returning valve 8 to its A position. There is effectively no water flow through the circuit until thermostat 12 returns to its low temperature position and the boiler and pump are re-energised.

The summary is:

| Item | 4 | 5 | 7 | 8 | 9 | 10 |
|------|---|---|---|---|---|----|
| Status | LT | LT | LT | N | N | N |
| Position | A | A | A | A | Open | Open |

| Item | 12 | 14 | 17 | 19 | 22 | 27 | 28 | 34 | 35 |
|------|----|----|----|----|----|----|----|----|----|
| Status | HT | N | N | N | N | L | N | LT | N |
| Position | B | Off | Cld | Off | Cld | On | Off | A | A-C$_1$ |

3. If at any point thermostat 34 reaches its high temperature value and switches to position B, the main effect is to de-energise boiler 19 and to energise valve 8 and the pump. Thus a flow of water is ensured through the boiler, and through valve 8 in position B, until the water temperature at 19 has reached a safe level and thermostat 34 has returned to its low temperature position.

C. Use of "hot water" programme and solid fuel burner

1. Until the water being heated by the solid fuel burner 1 and passing through thermostats 4 and 5 reaches 60°C (140°F), water heated by the boiler 19 will pass through the path 34, 20, 8, 14, 15, 10, 11, 13, 32, 21, with some also passing through the heat leak 16. Water heated by the solid fuel burner remains effectively un-flowing, although a certain amount of flow does occur through flow pipe 6 and thermostats 4 and 5.
Summary:

| Item | 4 | 5 | 7 | 8 | 9 | 10 |
|------|---|---|---|---|---|----|
| Status | LT | LT | LT | L | L | N |
| Position | A | A | A | B | Cld | Open |

| Item | 12 | 14 | 15 | 19 | 22 | 27 | 28 | 34 | 35 |
|------|----|----|----|----|----|----|----|----|----|
| Status | LT | L | N | L | N | L | N | LT | N |
| Position | A | On | Cld | On | Cld | On | Off | A | A-C$_1$ |

2. If at this stage the cylinder thermostat 12 switches to its high temperature position, the pump and boiler are simply de-energised, valve 9 opens and valve 8 returns to position A. In this case, the main boiler is no longer needed to heat water in the cylinder. There is little flow in the system since the pump 14 is no longer operational. A simple gravity circuit is set up over the route 1-2-4-5-7-8-9-16-13-3.
3. If pipe thermostat 34 reaches its high temperature threshold, this serves to de-energise boiler 19 whilst leaving pump 14 on, valve 9 closed and valve 8 in position B. Water flow is maintained through the boiler and cylinder until the water temperature in boiler 19 has returned to a safe level.
4. Once the temperature of the water heated by 1 rises above 60°C (140°F), thermostats 4 and 5 will switch to their high temperature position (B). This serves to switch off boiler 19 and return valve 8 to position A. Water flows through 4, 5, 6, 7, 8, 14, 15, 10, cylinder 11, 13, 33 and 3. The solid fuel burner 1 is used to heat water in the cylinder 11 without help from the main boiler 19.
Summary:

| Item | 4 | 5 | 7 | 8 | 9 | 10 | 12 |
|------|------|------|------|------|------|------|------|
| Status | HT | HT | LT | N | L | N | LT |
| Position | B | B | A | A | Cld | Open | A |

| Item | 14 | 17 | 19 | 22 | 27 | 28 | 34 | 35 |
|------|------|------|------|------|------|------|------|------|
| Status | L | N | N | N | L | N | LT | N |
| Position | On | Cld | Off | Cld | On | Off | A | $A-C_1$ |

5. If at this point the water in the cylinder reaches a sufficient temperature for thermostat 12 to switch to its high temperature position, the summary is:

| Item | 4 | 5 | 7 | 8 | 9 | 10 |
|------|------|------|------|------|------|------|
| Status | HT | HT | LT | N | L | L |
| Position | B | B | A | A | Cld | Cld |

| Item | 12 | 14 | 17 | 19 | 22 | 27 | 28 | 34 | 35 |
|------|------|------|------|------|------|------|------|------|------|
| Status | HT | L | N | N | N | L | N | LT | N |
| Position | B | On | Cld | Off | Cld | On | Off | A | $A-C_1$ |

ie. the boiler remains switched off and valve 8 in its A position, but valve 10 closes. Water is pumped along the route 1-2-4-5-7-8-14-15-16-13-33-3, by-passing cylinder 11. The boiler plays no part in the circuit.

6. If following (4) above, pipe thermostat 34 switches to its high temperature position (B), the summary becomes:

| Item | 4 | 5 | 7 | 8 | 9 | 10 |
|------|------|------|------|------|------|------|
| Status | HT | HT | LT | L | L | N |
| Position | B | B | A | B | Cld | Open |

| Item | 12 | 14 | 17 | 19 | 22 | 27 | 28 | 34 | 35 |
|------|------|------|------|------|------|------|------|------|------|
| Status | LT | L | N | N | L | L | N | HT | N |
| Position | A | On | Cld | Off | Open | On | Off | B | $A-C_1$ |

The boiler remains off, valve 22 opens and valve 8 moves to its B position. Water in the circuit is being heated only by the solid fuel burner 1, however, flow is also allowed through boiler 19 so as to dissipate excess heat and prevent water from boiling at 19. For this purpose, water heated at 1 is allowed through valve 22 and the by-pass pipe, and is fed into the return 21 of the boiler through junction 32. Water flows as follows:
1-2-4-5-7-22-32-21-19-34-20-8-14-15-10-11-13-32-21-19 (etc.)

7. Once the temperature of the water heated by 1 rises above the second/third threshold temperature set on thermostat 7, the summary becomes:

8

| Item | 4 | 5 | 7 | 8 | 9 | 10 | 12 |
|------|---|---|---|---|---|----|----|
| Status | HT | HT | HT | N | L | N | LT |
| Position | B | B | B | A | Cld | Open | A |

| Item | 14 | 17 | 19 | 22 | 27 | 28 | 34 | 35 |
|------|----|----|----|----|----|----|----|----|
| Status | L | L | N | N | L | N | LT | L |
| Position | On | Open | Off | Cld | On | Off | A | B-C$_2$ |

and the only water flow is through the circuits including 1,2,4,5,6,7,8 (in position A), 14,33 and 3. Water heated by burner 1 is used to generate hot water in cylinder 11 and central heating in the circuit 18. The main boiler, however, is not needed to assist the solid fuel burner in this task. Thus, thermostat 7 in this case determines when the main boiler can be switched off and the solid fuel burner used to produce both domestic hot water and central heating. The user determines himself, in setting the second/third threshold temperature on thermostat 7, at which temperature this will occur.

8. If in the case described in (7) above, thermostat 34 switches to its high temperature position, valve 8 is switched to position B and valve 22 is opened. Water flow is allowed through the boiler (non-operational) to dissipate excess heat, and also from the solid fuel burner flow pipe 2 to the main boiler return pipe 21 via the by-pass pipe and valve 22.

9. If in either (7) or (8) above, cylinder thermostat 12 moves to its high temperature position, the effect is simply to close valve 10 and prevent flow through the cylinder.

D. Use of the "Central Heating" Programme only

1. The user selects this programme (28) on programmer 26. The solid fuel burner is not lit. Valve 17 leading to central heating circuit 18 is permanently open when
Summary

| Item | 4 | 5 | 7 | 8 | 9 | 10 |
|------|---|---|---|---|---|----|
| Status | LT | LT | LT | L | L | N |
| Position | A | A | A | B | Cld | Open |

| Item | 12 | 14 | 17 | 19 | 22 | 27 | 28 | 34 | 35 |
|------|----|----|----|----|----|----|----|----|----|
| Status | LT | L | L | L | N | N | L | LT | N |
| Position | A | On | Open | On | Cld | Off | On | A | A-C$_1$ |

2. If cylinder thermostat 12 switches to its high temperature position, the effect is to energise valve 10, which closes, hence temporarily preventing flow through cylinder 11.

3 If thermostat 34 switches to its high temperature position, the effect is to de-energize boiler 19, which switches off. Water remains flowing as before, however, and surplus heat at 19 can be dissipated in the cylinder (if valve 10 is open) and the central heating circuit 18.

E. Use of the "Central Heating" and "Hot Water" Programmes

1. The user switches the programmer on at both 27 and 28. This switches on the boiler and the pump. Valve 8 is in position B, and valve 17 leading to the central heating circuit is live and therefore open. The water flow is exactly as in D(1) above.

2. The effect of either thermostat 12 or 34 switching to its high temperature position is exactly as in D above.

F. Use of the "Central Heating" Programme and the Solid Fuel Burner

1. The user switches the programmer on at 28, and hence valve 17 is permanently live and open, allowing water to flow through the central heating circuit 18. Initially, when the solid fuel burner 1 has been started up from cold, the summary is:

| Item | 4 | 5 | 7 | 8 | 9 | 10 | 12 | |
|------|----|----|----|---|-----|------|----|----|
| Status | LT | LT | LT | L | L | N | LT | |
| Position | A | A | A | B | Cld | Open | A | |

| Item | 14 | 17 | 19 | 22 | 27 | 28 | 34 | 35 |
|------|----|------|----|-----|-----|----|----|------|
| Status | L | L | L | N | N | L | LT | N |
| Position | On | Open | On | Cld | Off | On | A | A-C$_1$ |

ie. the boiler and the pump are both on, and water flows through the circuits 19-34-20-8-14-15-10-11-13-32-21, 19-34-20-8-14-15-16-13-32-21 and 19-34-20-8-14-17-18-33-13 32-21. There is also a small amount of flow through thermostats 4 and 5 and flow pipe 6.

2. If in (1) above thermostat 12 switches to its high temperature position, valve 10 is closed to prevent flow through the cylinder 11. If thermostat 34 switches to the high temperature position, this serves simply to de-energise the boiler 19. In either case, flow through boiler 19 is maintained.

3. Once the water passing through 4 and 5 reaches 60°C (140°F), the summary becomes:

| Item | 4 | 5 | 7 | 8 | 9 | 10 | 12 | |
|------|----|----|----|---|-----|------|----|----|
| Status | HT | HT | LT | L | L | N | LT | |
| Position | B | B | A | B | Cld | Open | A | |

| Item | 14 | 17 | 19 | 22 | 27 | 28 | 34 | 35 |
|------|----|------|----|------|-----|----|----|------|
| Status | L | L | L | L | N | L | LT | N |
| Position | On | Open | On | Open | Off | On | A | A-C$_1$ |

Water heated by burner 1 is now allowed, through valve 22 and the by-pass pipe, to flow into the main boiler return pipe 21.

In this "boosted" mode of operation, the heat output of the burner 1 boosts the temperature of the water in the return pipe 21 of the boiler 19. This assists operation of the radiators and domestic hot water can be generated more rapidly and more efficiently as water in the solid fuel burner flow pipe is directed to flow, through valve 22, into the return pipe 21 of the boiler. There is still flow through boiler 19 and valve 8 in its position B.

The combined returns from 11 and 16 and from the by-pass pipe meet at T connection 32. This is subject to a pull, in the direction of return pipe 21, exerted by the pump via 8, 20 and 19. This in turn exerts a pull on the route 1-2-4-5-7-22-32, incorporating the solid fuel burner.

4. The effect of either of thermostats 12 and 34 switching to its high temperature position is now the same as in (2) above.

5. Once water passing through thermostat 7 becomes hot enough to switch the thermostat to its high temperature position, the main boiler is switched off and valve 8 returns to position A. The solid fuel burner alone is used to heat water for the central heating radiators, and the main boiler is no longer needed, hence saving on fuel.
Summary

| Item | 4 | 5 | 7 | 8 | 9 | 10 | 12 |
|---|---|---|---|---|---|---|---|
| Status | HT | HT | HT | N | L | N | LT |
| Position | B | B | B | A | Cld | Open | A |

| Item | 14 | 17 | 19 | 22 | 27 | 28 | 34 | 35 |
|---|---|---|---|---|---|---|---|---|
| Status | L | L | N | N | N | L | LT | L |
| Position | On | Open | Off | Cld | Off | On | A | B-C$_2$ |

Hence, again, thermostat 7 acts to control the balance between the solid fuel burner and the main boiler, allowing the latter to be switched off when the former is generating sufficient heat to meet the user's requirements.

6. If in this situation thermostat 34 switch to its high temperature position, the effect is to energise valve 8 so as to re-direct water flow through boiler 19. Valve 22 is now open, and water heated by burner 1 passes through the by-pass pipe into return pipe 21.

7. If in either (5) or (6) above, thermostat 12 moves to its high temperature position, this causes valve 10 to close and thus prevents water flow through cylinder 11.

G. Use of the "Central Heating" and "Hot Water" Programmes and the Solid Fuel Burner

1. Initially flow is in the boiler circuit only, along the paths 19-34-20-8-14-17-18-33-13-32-21, 19-34-20-8-14-15-10-11-13-32-21 and 19-34-20-8-14-15-16-13-32-21. The boiler heats water which flows through cylinder 11 to generate domestic hot water and through circuit 18 to provide central heating. Water heated by the solid fuel burner only flows through 2,4, 5 and 6, valves 22 and 8 being closed to that part of the circuit.
Summary

| Item | 4 | 5 | 7 | 8 | 9 | 10 |
|---|---|---|---|---|---|---|
| Status | LT | LT | LT | L | L | N |
| Position | A | A | A | B | Cld | Open |

| Item | 12 | 14 | 17 | 19 | 22 | 27 | 28 | 34 | 35 |
|---|---|---|---|---|---|---|---|---|---|
| Status | LT | L | L | L | N | L | L | LT | N |
| Position | A | On | Open | On | Cld | On | On | A | A-C$_1$ |

2. When the water heated by the solid fuel burner reaches 60°C (140°F), thermostats 4 and 5 switch to their high temperature positions. This has the effect of activating valve 22, which opens, to allow water heated by the solid fuel burner to flow through the circuit 4-5-7-22-32-21, through the by-pass pipe and into the return pipe of the boiler. Once again, the heat generated by the solid fuel burner is used to boost the temperature of the water in the boiler return pipe and assist in the generation of domestic hot water and of heat in the central heating circuit 18. The boiler has effectively less work to do in heating water, and fuel can thus be saved.
Summary

| Item | 4 | 5 | 7 | 8 | 9 | 10 | 12 |
|---|---|---|---|---|---|---|---|
| Status | HT | HT | LT | L | L | N | LT |
| Position | B | B | A | B | Cld | Open | A |

| Item | 14 | 17 | 19 | 22 | 27 | 28 | 34 | 35 |
|---|---|---|---|---|---|---|---|---|
| Status | L | L | L | L | L | L | LT | N |
| Position | On | Open | On | Open | On | On | A | $A\text{-}C_1$ |

3. If at any point the water in cylinder 11 reaches a sufficient temperature to switch thermostat 12 to its high temperature position, valve 10 becomes live and closes. The circuit for water flow remains the same as before except that flow through 10 and 11 is now cut off.

4. When the water passing through thermostats 4, 5 and 7 reaches the second/third threshold temperature set on thermostat 7, the summary is:

| Item | 4 | 5 | 7 | 8 | 9 | 10 |
|---|---|---|---|---|---|---|
| Status | HT | HT | HT | N | L | N |
| Position | B | B | B | A | Cld | Open |

| Item | 12 | 14 | 17 | 19 | 22 | 27 | 28 | 34 | 35 |
|---|---|---|---|---|---|---|---|---|---|
| Status | LT | L | L | N | N | L | L | LT | L |
| Position | A | On | Open | Off | Cld | On | On | A | $B\text{-}C_2$ |

The boiler is switched off and water flows only along the three routes 1-2-3-4-5-7-8-14-15-10-11-13-33-3; 1-2-4-5-7-8-14-15-16-13-33-3 and 1-2-4-5-7-8-14-17-18-33-3. Hot water is still generated in the secondary water circuit and water in the primary circuit still flows through the central heating radiators, pump 14 helping to push water around the circuit.

Thermostats 4, 5 and 7 still monitor the water temperature in the circuit. As soon as the temperature falls to below the second/third threshold temperature, the boiler switches on again, valve 8 switches to the B position and valve 22 opens, allowing flow through the "boiler" branch of the circuit once more, with flow from the solid fuel burner through the by-pass pipe and into boiler return pipe 21.

5. Again, if thermostat 12 switches to its high temperature position, the only change is that valve 10 closes, thereby cutting off flow through the hot water cylinder.

6. If valve 34 switches to its high temperature position during any of (1) to (5) above, the only effect on the system is to render boiler 19 inoperative if it is not already switched off and to set valve 8 to position B to maintain flow through 19. Thus over-heating in the boiler is prevented.

The apparatus of the present invention could either be provided as a complete system, such as is described above, or as a "kit" comprising items 8,9,10,13,14,15,17, 22,31, 32 and 35. This kit would be of use in linking up a solid fuel burner or similar subsidiary heating device, either one already installed or on installation itself, into an existing primary circuit through an indirect hot water cylinder and central heating circuit. The kit might, for instance, be provided as a conveniently sized panel on which are located the required items and connected pipes. The programmer 26, and possibly also pipe thermostat 7, may also be provided on this panel. Suitable connections would be provided such that the panel pipes could easily be joined to existing pipes, and the panel circuit inserted into the existing primary circuit.

The complete system thus achieved allows for the efficient and automatic control of a boiler in conjunction with a solid fuel burner to provide heating and hot water supplies as required. The heat generated by the solid fuel burner is utilized to "boost" the boiler's output, and thermostats ensure that no power surplus to requirements need be put into the system. When the solid fuel burner alone is generating sufficient heat to satisfy the user's requirements, the system ensures that the boiler is not also kept unnecessarily switched on. Thus the two heaters are linked so as to work in harmony.

Channelling of water heated by the solid fuel burner through the return pipe of the boiler, and allowing water heated by the burner only to meet that heated by the boiler at a point where the temperature difference is not likely to be too great, ensures that boiling of the burner-heated water in the pipes is kept to a minimum. In this way, the problems associated with existing solid fuel burner-boiler link-ups are greatly reduced.

**Claims**

1. Heating apparatus comprising main flow and return pipes (120, 121) for connection to a main water heating device (119); subsidiary flow and return pipes (102, 103) for connection to a subsidiary water heating device (101); pipework (140) for connection to an indirect cylinder and/or radiators; a flow control valve (108) which in a first position is operative to place the main flow pipe (120) in communication with a flow end of the pipework (140) and in a second position is operative to place the subsidiary flow pipe (102) in communication with the flow end of the pipework (140), a return end of the pipework (140) being connected to the main and subsidiary return pipes (121, 103); characterised by a by-pass pipe (141) inter-connecting the subsidiary flow pipe (102) and the main return pipe (121) independently of the connection from the subsidiary flow pipe (102) through the pipework (140) to the main return pipe (121); a by-pass valve (122) in the by-pass pipe (141); and control means for controlling the valves (108, 122) such that in a boosted mode of operation the flow control valve (108) is in the first position thereof and the by-pass valve (122) is open to allow water from the subsidiary flow pipe to flow through the by-pass pipe (141) and to enter the main return pipe (121), whereby the heat output of the subsidiary heating device (101) boosts the temperature of the water in the return pipe (121) to the main heating device (119).

2. Heating apparatus according to claim 1, characterised by including a pump for fitting in the pipework (140), the control means controlling the pump to pump water through the cylinder and, under appropriate conditions, through both the cylinder and the radiators.

3. Heating apparatus according to Claim 1 or Claim 2, characterised in that the control means controls operation of the valves and pump such that if the subsidiary heating device (101) is started up from cold without the main heating device (119) being operated, convection occurs through the subsidiary flow pipe (102), through the flow control valve (108) in its second position, through the pipework (140) and the indirect cylinder, and thence into the subsidiary return pipe (103) with the by-pass valve (122) remaining closed, until a first threshold temperature is reached in the subsidiary flow pipe (102), at which first threshold temperature the pump is energised to pump water through the pipework (140) and the cylinder but not the radiators.

4. Heating apparatus according to Claim 3, characterised in that water is pumped through both the cylinders and the radiators if a second threshold temperature, higher than the first threshold temperature, is exceeded.

5. Heating apparatus according to Claim 4, characterised in that the second threshold temperature value is variable, such that it can be determined and varied by the user of the apparatus.

6. Heating apparatus according to any one of the preceding Claims, characterised by including regulatory means which cause the flow control valve (108) to be in its second position and the main water heating device (119) to be rendered non-operational when the temperature of water in the subsidiary flow pipe (102) reaches a third threshold temperature.

7. Heating apparatus according to Claim 6, characterised in that the regulatory means comprises a thermostat for recording the temperature of water in the subsidiary flow pipe (102), and associated means for controlling the flow control valve and the main water heating device (119) according to whether the thermostat records a temperature of above or below the third threshold.

8. Heating apparatus according to Claim 7, characterised in that the third threshold temperature value is variable such that it can be determined and varied by the user of the apparatus.

9. Apparatus according to Claim 4 and Claim 6, characterised in that the second and third threshold temperatures have the same value.

**Patentansprüche**

1. Heizungsanlage mit einer Hauptvorlauf- und -rücklaufleitung (120, 121) zum Anschließen an eine Hauptwasserheizvorrichtung (119), mit Hilfszulauf- und -rücklaufleitungen (102, 103) zum Anschluß an eine Hilfswasserheizvorrichtung (101), mit Leitungen (140) zum Anschließen an einen indirekten Zylinder und/oder an Radiatoren, mit einem Vorlaufsteuerventil (108), das in einer ersten Stellung die Hauptvorlaufleitung (120) mit einem Vorlaufende der Leitungen (140) und in einer zweiten Stellung die Hilfsvorlaufleitung (102) mit dem Vorlaufende der Leitungen (140) verbindet, wobei ein Rücklaufende der Leitungen (140) mit der Haupt- und Hilfsrücklaufleitung (121, 103) verbunden ist, gekennzeichnet durch eine Umgehungsleitung (141), die die Hilfsvorlaufleitung (102) und die Hauptrücklaufleitung (121) unabhängig von der Verbindung der Hilfsvorlaufleitung (102) mit der Hauptrücklaufleitung (121) über die Leitungen (140) verbindet, ein Umgehungsventil (122) in der Umgehungsleitung (141) und eine Steuereinrichtung zum Steuern der Ventile (108, 122), so daß sich das Vorlaufsteuerventil (108) in einer hochgefahrenen Betriebsweise in der ersten Stellung befindet und das Umgehungsventil (122) zum Durchlassen von Wasser von der Hilfsvorlaufleitung über die Umgehungsleitung (141) zum Eintritt in die Hauptrücklaufleitung (121) offen ist, wodurch die Wärmeabgabe der Hilfsheizvorrichtung (101) die Temperatur des Wassers in der Rücklaufleitung (121) auf die Hauptheizvorrichtung (119) hochfährt.

2. Heizungsanlage nach Anspruch 1, gekennzeichnet durch den Einschluß einer Pumpe zum Einbau in die Leitungen (140), wobei die Steuereinrichtung die Pumpe zwecks Pumpen des Wassers durch den Zylinder und unter geeigneten Bedingungen durch sowohl den Zylinder als auch die Radiatoren steuert.

3. Heizungsanlage nach Anspruch 1 oder Anspruch 2, dadurch gekennzeichnet, daß die Steuereinrichtung den Betrieb der Ventile und der Pumpe so steuert, daß, falls die Hilfsheizvorrichtung (101) vom kalten Zustand ohne Betrieb der Hauptheizvorrichtung (119) angefahren wird, eine Konvektion über die Hilfsvorlaufleitung (102), durch das Vorlaufsteuerventil (108) in dessen zweiter Stellung, durch die Leitungen (140) und den indirekten Zylinder und dann in die Hilfsrücklaufleitung (103) bei geschlossen bleibendem Umgehungsventil (122) bis zum Erreichen einer ersten Schwellwerttemperatur in der Hilfvorlaufleitung (102) erfolgt, wobei die Pumpe bei dieser ersten Schwellwerttemperatur zum Pumpen von Wasser durch die Leitungen (140) und den Zylinder, aber nicht die Radiatoren, eingeschaltet wird.

4. Heizungsanlage nach Anspruch 3, dadurch gekennzeichnet, daß das Wasser sowohl durch die Zylinder als auch durch die Radiatoren gepumpt wird, falls eine zweite Schwellwerttemperatur, die über der ersten Schwellwerttemperatur liegt, überschritten wird.

5. Heizungsanlage nach Anspruch 4, dadurch gekennzeichnet, daß der Betrag der zweiten Schwellwerttemperatur veränderlich ist, so daß er bestimmt und durch den Anwender der Anlage verändert werden kann.

6. Heizungsanlage nach irgendeinem der vorhergehenden Patentansprüche, gekennzeichnet durch den Einschluß einer Reguliereinrichtung, die bewirkt, daß sich das Vorlaufsteuerventil (108) in seiner zweiten Stellung befindet und die Hauptwasserheizvorrichtung (119) in ihre Außerbetriebsstellung gebracht wird, wenn die Temperatur des Wassers in der Hilfsvorlaufleitung (102) eine dritte Schwellwerttemperatur erreicht.

7. Heizungsanlage nach Anspruch 6, dadurch gekennzeichnet, daß die Reguliereinrichtung einen Thermostat zum Anzeigen der Temperatur des Wassers in der Hilfsvorlaufleitung (102) und zugehörige Einrichtungen zum Steuern des Vorlaufsteuerventils und der Hauptwasserheizvorrichtung (119) abhängig davon, ob der Thermostat eine Temperatur über oder unter dem dritten Schwellwert anzeigt, umfaßt.

8. Heizungsanlage nach Anspruch 7, dadurch gekennzeichnet, daß der Betrag der dritten Schwellwerttemperatur veränderlich ist, so daß er bestimmt und durch den Anwender der Anlage verändert werden kann.

**9.** Anlage nach Anspruch 4 und Anspruch 6, dadurch gekennzeichnet, daß die zweite und die dritte Schwellwerttemperatur den gleichen Wert haben.

**Revendications**

**1.** Appareil de chauffage comprenant des canalisations principales d'arrivée et de retour (120, 121) à raccorder à un dispositif principal de chauffage d'eau (119); des canalisations auxiliaires d'arrivée et de retour (102, 103) à raccorder à un dispositif auxiliaire de chauffage d'eau (101); un réseau de canalisations (140) à raccorder à un cylindre indirect et/ou à des radiateurs; une vanne de contrôle de débit (108) qui dans une première position sert à mettre la canalisation principale d'arrivée (120) en communication avec une extrémité d'arrivée du réseau de canalisations (140) et qui dans une seconde position sert à mettre la canalisation auxiliaire d'arrivée (102) en communication avec l'extrémité d'arrivée du réseau de canalisations (140), une extrémité de retour du réseau de canalisations (140) étant raccordée aux canalisations principale et auxiliaire de retour (121, 103), caractérisé par une canalisation de dérivation (141) reliant la canalisation auxiliaire d'arrivée (102) et la canalisation principale de retour (121) indépendamment du raccordement de la canalisation auxiliaire d'arrivée (102) à la canalisation principale de retour (121) à travers le réseau de canalisations (140); une vanne de dérivation (122) placée dans la canalisation de dérivation (141); et des moyens de commande pour commander les vannes (108, 122) de telle façon que, dans un mode de fonctionnement poussé, la vanne de contrôle de débit (108) se trouve dans sa première position et que la vanne de dérivation (122) soit ouverte pour laisser circuler de l'eau de la canalisation auxiliaire d'arrivée à travers la canalisation de dérivation (141) et la laisser pénétrer dans la canalisation principale de retour (121), la puissance de chauffe du dispositif auxiliaire de chauffage (101) augmentant la température de l'eau dans la canalisation de retour (121) vers le dispositif principal de chauffage (119).

**2.** Appareil de chauffage suivant la revendication 1, caractérisé en ce que l'on ajoute une pompe à incorporer dans le réseau de canalisations (140), les moyens de commande commandant la pompe afin de pomper de l'eau à travers cylindre et, dans des conditions appropriées, à travers à la fois le cylindre et les radiateurs.

**3.** Appareil de chauffage suivant la revendication 1 ou la revendication caractérisé en ce que les moyens de commande com mandent le fonctionnement des vannes et de la pompe de telle façon que, si le dispositif auxiliaire de chauffage (101) est mis en route à froid sans que le dispositif principal de chauffage (119) soit en fonctionnement, la convection se produise à travers la canalisation auxiliaire d'arrivée (102), à travers la vanne de contrôle de débit (108) dans sa seconde position, à travers le réseau de canalisations (140) et le cylindre indirect, et de là dans la canalisation auxiliaire de retour (103) avec la vanne de dérivation (122) demeurant fermée, jusqu'à ce qu'un premier seuil de température soit atteint dans la canalisation auxiliaire d'arrivée (102), premier seuil de température auquel la pompe est activée pour pomper de l'eau à travers le réseau de canalisations (140) et le cylindre mais pas à travers les radiateurs.

**4.** Appareil de chauffage suivant la revendication 3, caractérisé en ce que de l'eau est pompée à la fois à travers les cylindres et les radiateurs si on dépasse un deuxième seuil de température, plus élevé que le premier seuil de température.

**5.** Appareil de chauffage suivant la revendication 4, caractérisé en ce que la valeur du deuxième seuil de température est variable, de telle sorte qu'elle puisse être déterminée et modifiée par l'utilisateur de l'appareil.

**6.** Appareil de chauffage suivant l'une quelconque des revendications précédentes, caractérisé en ce que l'on ajoute des moyens de régulation qui mettent la vanne de contrôle de débit (108) dans sa seconde position et qui rendent le dispositif principal de chauffage d'eau (119) non opérationnel lorsque la température de l'eau dans la canalisation auxiliaire d'arrivée (102) atteint un troisième seuil de température.

**7.** Appareil de chauffage suivant la revendication 6, caractérisé en ce que les moyens dc régulation comprennent un thermostat pour enregistrer la température de l'eau dans la canalisation auxiliaire d'arrivée (102), ainsi que des moyens associés pour commander la vanne de contrôle de débit et le dispositif principal de chauffage d'eau (119) selon que le thermostat enregistre une température supérieure ou inférieure au troisième seuil.

8.  Appareil de chauffage suivant la revendication 7, caractérisé en ce que la valeur du troisième seuil de température est variable, de telle sorte qu'elle puisse être déterminée et modifiée par l'utilisateur de l'appareil.

9.  Appareil de chauffage suivant la revendication 4 et la revendication 6, caractérisé en ce que le deuxième et le troisième seuils de température ont la même valeur.

Fig. 1

Fig. 2

Fig. 4

EP 0 485 469 B1

Fig. 3

EP 0 485 469 B1